# EUROPEAN PATENT APPLICATION

(11) **EP 4 635 722 A1**
(43) Date of publication of application: **22.10.2025**
(21) Application number: 24878700.4
(22) Date of filing: 29.08.2024
(51) Int. Cl.: B29D 30/06, B29D 30/08, B29C 35/04, B29C 35/02, B29C 35/16, F24H 3/04, F24H 9/18, F24H 9/00

(54) **FULL-NITROGEN CIRCULATION, HEATING AND VULCANIZATION SYSTEM, AND VULCANIZATION METHOD**

(30) Priority: 18.10.2023 CN 202322798510 U; 18.10.2023 CN 202311354655; 18.10.2023 CN 202322801136 U; 18.10.2023 CN 202311351667; 18.10.2023 CN 202322798509 U
(71) Applicant: Beijing University of Chemical Technology, Beijing 100020 (CN); Arp Technologies (Suzhou) Co., Ltd., Suzhou, Jiangsu 215216 (CN); Shen Zhen Su Neng Energy Saving Equipment Co. Ltd, Shenzhen, Guangdong 518118 (CN)
(72) Inventor: JIAO, Zhiwei, Suzhou, Jiangsu 215216 (CN); TU, Yuxiang, Suzhou, Jiangsu 215216 (CN); ZHANG, Zhengluo, Suzhou, Jiangsu 215216 (CN); YANG, Weimin, Suzhou, Jiangsu 215216 (CN); YAN, Hua, Suzhou, Jiangsu 215216 (CN); XUN, Shanglun, Suzhou, Jiangsu 215216 (CN)
(74) Representative: HGF
(86) International application number: PCT/CN2024/115400
(87) International publication number: WO 2025/082050

(57) **Abstract**

Provided are an all-nitrogen circulating heating and vulcanization system and vulcanization method. The system includes a circulation pipeline (7). A circulation pump (1), a gas heater (4), a nitrogen heating uniformity apparatus (6), an annular seat cylinder head, a capsule (31), a circulation buffer tank (15), and a filter (16) are disposed on the circulation pipeline (7) sequentially. The capsule (31) is disposed on the annular seat cylinder head. The circulation buffer tank (15) is connected to a nitrogen supplement pipeline (33). A nitrogen production system (22), a low-pressure nitrogen buffer tank (23), a booster pump (24), a high-pressure nitrogen buffer tank (25), a pressure reducing valve (26), and a nitrogen supplement one-way valve (27) are disposed on the nitrogen supplement pipeline (33) sequentially. A recovery pipeline (20) is disposed between the capsule (31) and the low-pressure nitrogen buffer tank (23). A vacuum pump (29) and a first recovery valve (28) are disposed on the recovery pipeline (20). A second recovery valve (30) is connected in parallel to a head end of the vacuum pump (29) and a tail end of the vacuum pump (29). A cooling pipeline (32) is connected in parallel on the circulation pipeline (7). A first cooling valve (17), a second cooling valve (18), and a cooling apparatus (19) are disposed on the cooling pipeline (32).

## Description

The present application claims priority to Chinese Patent Application No. 202322798510.5 filed with the China National Intellectual Property Administration (CNIPA) on Oct. 18, 2023, Chinese Patent Application No. 202311354655.4 filed with the China National Intellectual Property Administration (CNIPA) on Oct. 18, 2023, Chinese Patent Application No. 202322801136.X filed with the China National Intellectual Property Administration (CNIPA) on Oct. 18, 2023, Chinese Patent Application No. 202311351667.1 filed with the China National Intellectual Property Administration (CNIPA) on Oct. 18, 2023, and Chinese Patent Application No. 202322798509.2 filed with the China National Intellectual Property Administration (CNIPA) on Oct. 18, 2023, the disclosure of which is incorporated herein by reference in its entirety.

### TECHNICAL FIELD

The present application relates to the field of tire all-nitrogen circulating heating and vulcanization technology, for example, an all-nitrogen circulating heating and vulcanization system and vulcanization method.

### BACKGROUND

The co-vulcanization process of steam and nitrogen is used for vulcanization in the tire industry. The steam is used for providing a heat source for tire vulcanization, and the nitrogen is used for maintaining the pressure in a capsule. After the steam is supplemented, the nitrogen is sealed in the capsule. The requirements for a spray inlet of an annular seat cylinder head are not high. For the consideration of energy conservation and environmental protection, a tire all-nitrogen vulcanization process is proposed. According to the process, the nitrogen provides heat and pressure. During vulcanization, the nitrogen continuously circulates in a vulcanization system under the action of a circulation pump so that the capsule is kept at a certain temperature during tire vulcanization. Since the nitrogen circulates constantly in the system, certain requirements are raised on the spray inlet of the annular seat cylinder head and a nitrogen outlet of the annular seat cylinder head.

A gas heater is an electric heating device mainly used for heating a gas flow and is widely applied to the field of machinery and chemical engineering. Gas passes through an electric heating element under the action of pressure. The heat of the electric heating element is uniformly taken away according to fluid thermodynamic principles so that the temperature of the heated gas meets the requirements of the application process. The core of heater principles is energy conversion. The gas heater mainly has the consensus defects below.
1. When the gas flow is large, the heat of the electric heating element cannot be quickly and uniformly transferred to the gas. That is, the heating of the heater is not uniform, and the heat exchange rate is low, resulting in a limited flow rate of the gas in the heater and limiting the application range of the gas heater.
2. In a traditional heating manner, the temperature rises slows, and energy consumption is large, not meeting the current low-carbon and environmentally-friendly requirements.

Compared with superheated water and steam vulcanization, the co-vulcanization process of steam and nitrogen eliminates water heating and pumping, reducing the cost of vulcanization. Low-pressure nitrogen is used for shaping, saving steam cost. Besides, the problem of insufficient steam vulcanization pressure is solved. Therefore, the co-vulcanization process of steam and nitrogen has relatively perfect control on conditions and obvious advantages. Most tire production enterprises adopt such a process for vulcanization.

However, the co-vulcanization process of steam and nitrogen still does not get rid of the dependence on the steam. The steam must be provided through a boiler. In the working process of a coal boiler, plenty of toxic and harmful gases such as sulfur dioxide and carbon monoxide are generated, causing serious environmental pollution. Besides, the steam has the characteristics of easy fluctuation, high energy consumption, high loss, and the like, which is not beneficial to establishing a healthy green low-carbon and circular development economic system and implementing a major strategy decision of the 2030 peak carbon emissions. Moreover, during vulcanization, the steam can release heat to generate condensed water. The condensed water is converged on a side part of the capsule, resulting in different vulcanization degrees at the upper side part and lower side part of a tire and thereby affecting the vulcanization quality of the tire. In the pre-vulcanization stage of the co-vulcanization process of steam and nitrogen, a high-temperature medium needs to be repeatedly introduced to drain coagulation. The pressure in the capsule may fluctuate. In the pressure maintaining and vulcanization stage of the co-vulcanization process of steam and nitrogen, the temperature in the capsule is reduced because no heat enters, resulting in long pressure maintaining time. The nitrogen can be prepared by a pressure swing adsorption (PSA) device apparatus a diaphragm apparatus. Such a nitrogen supply manner is economical for a tire plant with a daily output of 20,000 tires.

### SUMMARY

The present application provides an annular seat cylinder head that can guarantee a uniform temperature and a stable pressure inside a capsule during the circulating vulcanization of nitrogen, helping to improve vulcanization quality.

The present application provides a gas heater. The application of the electromagnetic induction heating technology solves the problems of low heat transfer rate, long heating time, and large energy consumption of the gas in the heater.

The present application provides an all-nitrogen circulating heating and vulcanization system and vulcanization method that solve the shortcomings of serious pollution, large energy consumption, large pre-vulcanization pressure fluctuation, uneven temperature on upper and lower sides, and long pressure maintaining time in the co-vulcanization process of steam and nitrogen and have the advantages of energy saving and environmental protection, small pressure fluctuation, uniform temperature, and high efficiency.

An embodiment of the present provides an annular seat cylinder head. The cylinder head includes a cylinder head nozzle and a cylinder head seat connected to each other. Spray inlets, cylinder head nitrogen outlets, a gas inlet groove, and a gas outlet groove are designed on the cylinder head nozzle. The spray inlets are disposed on a side surface of the cylinder head nozzle. The spray directions of the spray inlets are tangent to a central circle and incline downwards. The cylinder head nitrogen outlets are disposed on a top surface of the cylinder head nozzle. The cylinder head nitrogen outlets are uniformly distributed in a circumferential direction. The gas inlet groove is an arc groove. A center of the arc groove is on a central axis of the cylinder head nozzle. A plane where a notch of the arc groove is located is parallel to the top surface of the cylinder head nozzle. The arc groove communicates with the spray inlets. The gas outlet groove is a circular groove, is located inside the gas inlet groove, and communicates with the cylinder head nitrogen outlets. A vertical gas inlet through groove and a vertical gas outlet through groove are disposed in the cylinder head seat and communicate with the gas inlet groove and the gas outlet groove respectively. A cylinder head gas inlet and a cylinder head gas outlet are disposed on side surfaces of the cylinder head seat and communicate with the gas inlet through groove and the gas outlet through groove respectively.

An embodiment of the present provides a gas heater. The gas heater includes a first cylinder body, a gas inlet, and a gas outlet. The gas inlet and the gas outlet are located on two ends of the first cylinder body respectively. A porous heating body is disposed in the first cylinder body. The porous heating body is tightly attached to an inner wall of the first cylinder body through interference fit. A plurality of gas flow channels penetrating a left side and a right side of the porous heating body are disposed in the porous heating body. Flow guide cones are disposed at two ends of the porous heating body respectively. A conical pipe is welded at two ends of the first cylinder body. The conical pipe is located outside the flow guide cones. A flow channel is formed in a gap between an inner wall of the conical pipe and outer walls of the flow guide cones. Two ends of the conical pipe are securely connected to flange plates respectively. Openings in a middle of the flange plates communicate with the flow channel to form the gas inlet and the gas outlet respectively. An outer wall of the first cylinder body is wrapped with an electromagnetic heating and heat preservation apparatus.

An embodiment of the present provides an all-nitrogen circulating heating and vulcanization system. The system includes a circulation pipeline. A circulation pump, the preceding gas heater, a nitrogen heating uniformity apparatus, the preceding annular seat cylinder head, a capsule, a circulation buffer tank, and a filter are disposed on the circulation pipeline sequentially. The capsule is disposed on the annular seat cylinder head. The circulation buffer tank on the circulation pipeline is connected to a nitrogen supplement pipeline. A nitrogen production system, a low-pressure nitrogen buffer tank, a booster pump, a high-pressure nitrogen buffer tank, a pressure reducing valve, and a nitrogen supplement one-way valve are disposed on the nitrogen supplement pipeline sequentially. A recovery pipeline is disposed between the capsule on the circulation pipeline and the low-pressure nitrogen buffer tank on the nitrogen supplement pipeline. A vacuum pump and a first recovery valve are disposed on the recovery pipeline. A second recovery valve is connected in parallel to a head end of the vacuum pump and a tail end of the vacuum pump. A cooling pipeline is connected in parallel between the circulation pump and the circulation buffer tank and on the circulation pipeline. A first cooling valve, a second cooling valve, and a cooling apparatus are disposed on the cooling pipeline.

An embodiment of the present provides an all-nitrogen circulating heating and vulcanization method by using the preceding system. The method includes the steps below.

Nitrogen is filled into an all-nitrogen circulated heating and vulcanization system.

A gas heater and a nitrogen heating uniformity apparatus are preheated.

Heating circulation and vulcanization are performed on the nitrogen.

A capsule is cooled.

The nitrogen is recovered.

### BRIEF DESCRIPTION OF DRAWINGS

FIG. 1 is a perspective view of the structure of an annular seat cylinder head according to the present application.
FIG. 2 is a front view of the structure of the annular seat cylinder head according to the present application.
FIG. 3 is a view taken along section M-M of FIG. 2.
FIG. 4 is a perspective view of a gas heater according to the present application.
FIG. 5 is a front view of the gas heater according to the present application.
FIG. 6 is a structural view taken along section A-A of FIG. 2.
FIG. 7 is another structural view taken along section A-A of FIG. 2.
FIG. 8 is a structural view taken along section B-B of FIG. 2.

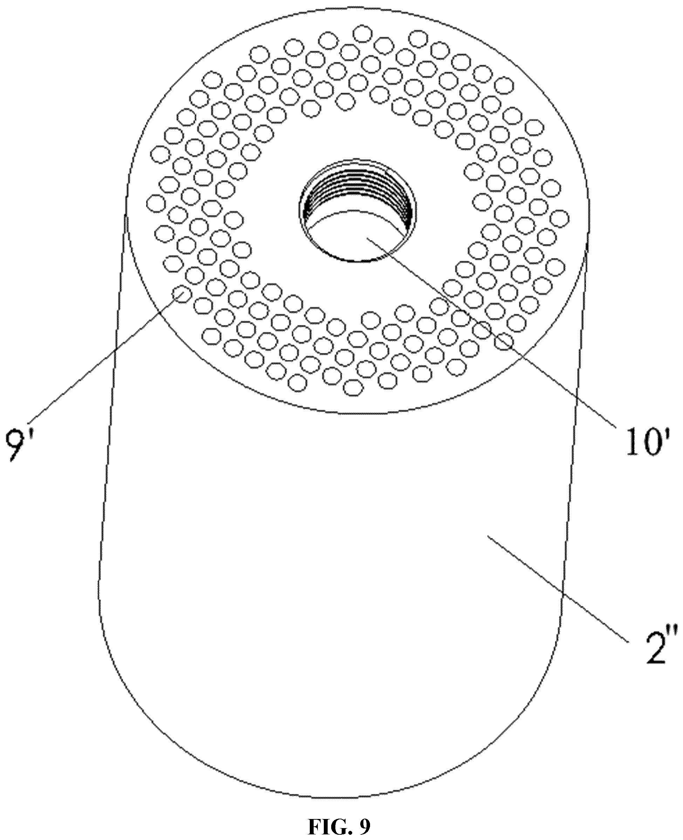

FIG.9 is a perspective view of the structure of a porous heating body according to the present application.

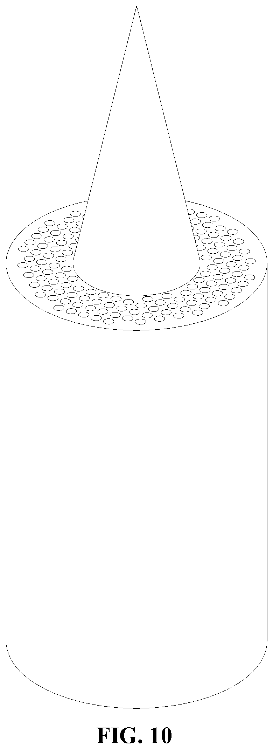

FIG.10 is a perspective view of the structure of the porous heating body and the structure of a flow guide cone according to the present application.

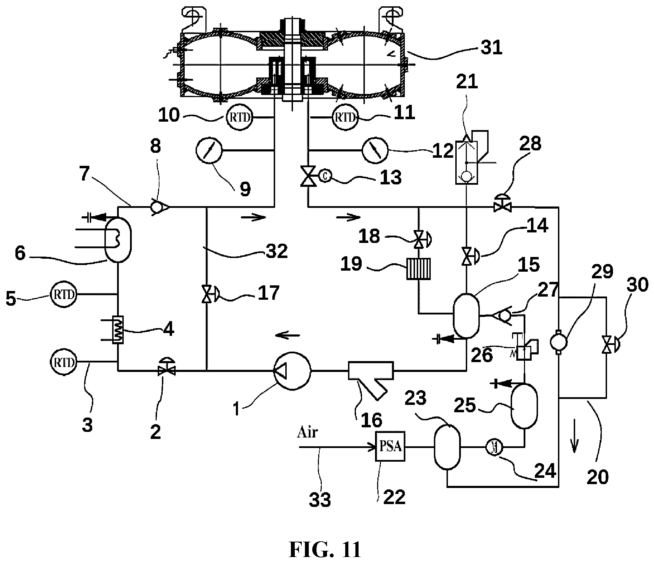

FIG. 11 is a view of the entire structure of an all-nitrogen circulating heating and vulcanization system according to the present application.

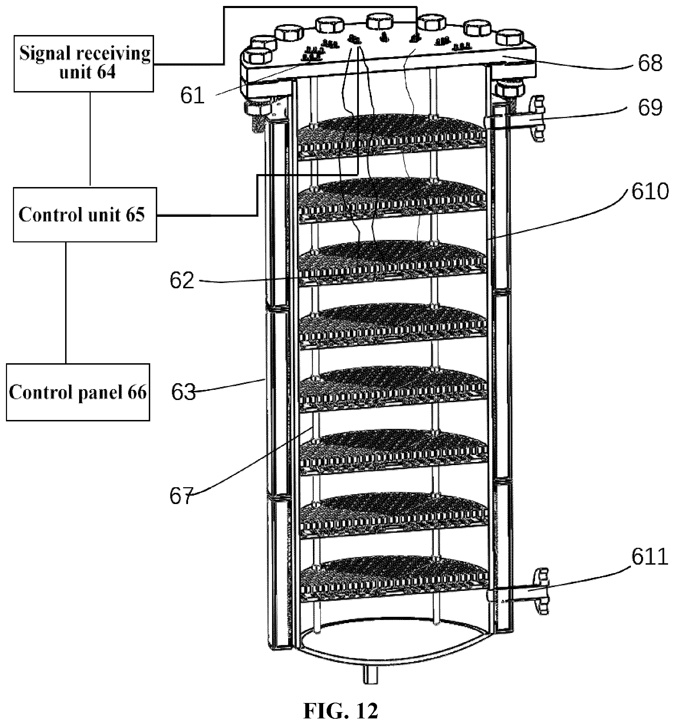

FIG. 12 is a structural view of a nitrogen heating uniformity apparatus according to the present application.

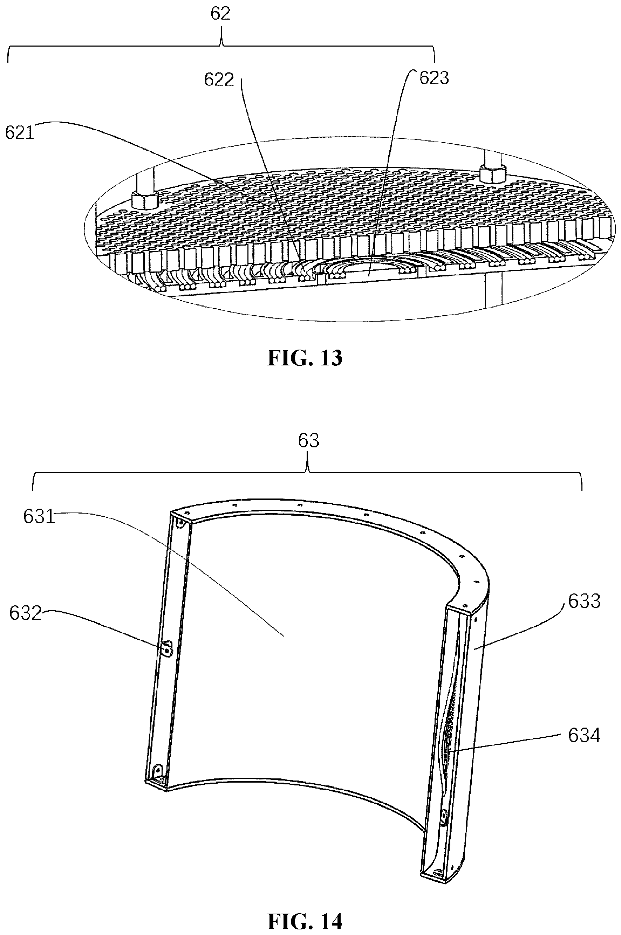

FIG. 13 is a partial enlarged view of the structure of a heating unit in the nitrogen heating uniformity apparatus according to the present application.
FIG. 14 is a structural view of a first electromagnetic heating and heat preservation apparatus in the nitrogen heating uniformity apparatus according to the present application.

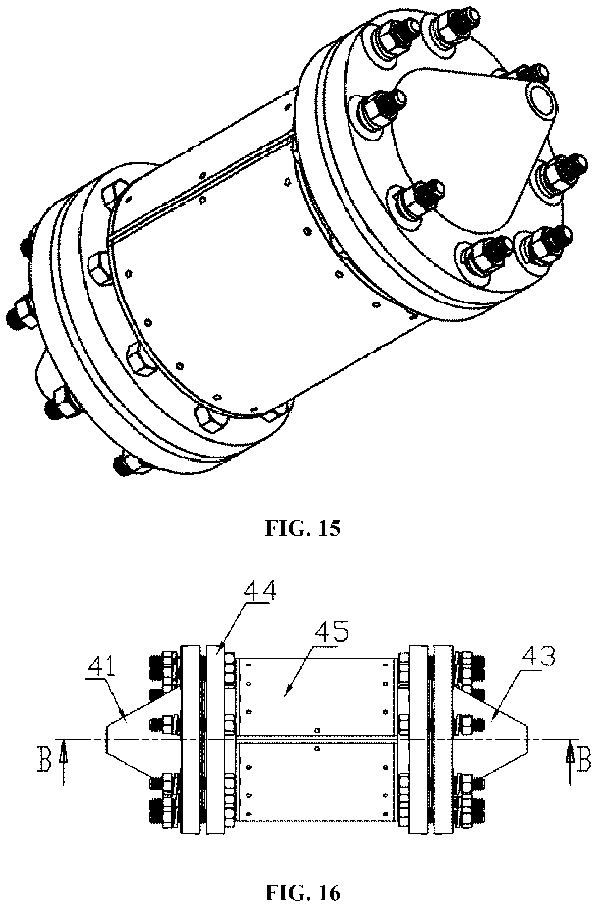

FIG. 15 is a perspective view of the structure of a quick heating apparatus according to the present application.
FIG. 16 is a front view of the structure of the quick heating apparatus according to the present application.

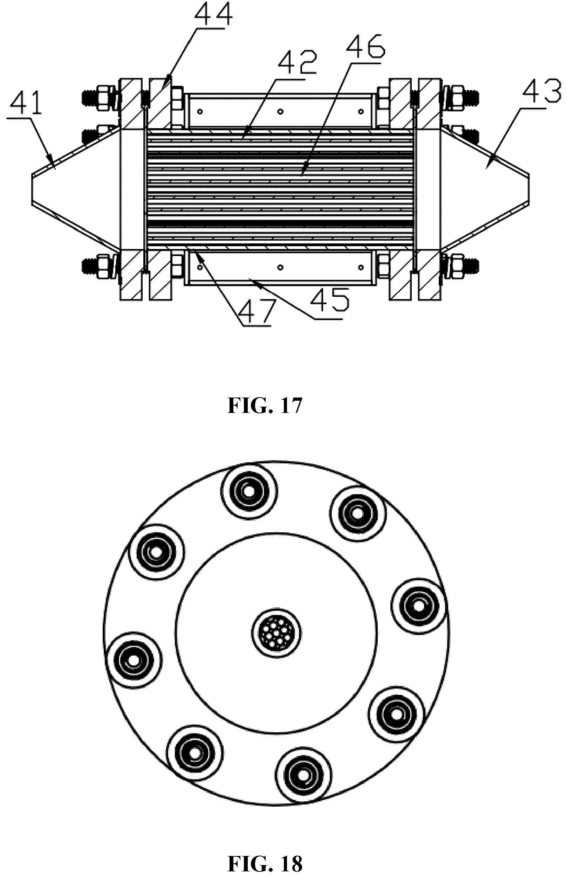

FIG. 17 is a sectional view of the structure of the quick heating apparatus according to the present application.
FIG. 18 is a left view of the structure of the quick heating apparatus according to the present application.

### Reference list

- 1': cylinder head nozzle
- 2': cylinder head seat
- 11': spray inlet
- 12': cylinder head nitrogen outlets
- 13': external thread
- 14': gas inlet groove
- 15': gas outlet groove
- 16': gas inlet through groove
- 17': gas outlet through groove
- 21': cylinder head gas inlet
- 22': cylinder head gas outlet
- 1": first cylinder body
- 2": porous heating body
- 3': flow guide cone
- 4': gas inlet
- 5': conical pipe
- 6': gas outlet
- 7': electromagnetic heating and heat preservation apparatus
- 8': heat preservation cover
- 9': gas flow channel
- 10': bolt and screw hole
- 1: circulation pump
- 2: first heating valve
- 3: first temperature sensor
- 4: quick heating apparatus
- 5: second temperature sensor
- 6: nitrogen heating uniformity apparatus
- 7: circulation pipeline
- 8: circulation one-way valve
- 9: first pressure sensor
- 10: third temperature sensor
- 11: fourth temperature sensor
- 12: second pressure sensor
- 13: back pressure valve
- 14: second heating valve
- 15: circulation buffer tank
- 16: filter
- 17: first cooling valve
- 18: second cooling valve
- 19: cooling apparatus
- 20: recovery pipeline
- 21: quick vent valve
- 22: nitrogen production system
- 23: low-pressure nitrogen buffer tank
- 24: booster pump
- 25: high-pressure nitrogen buffer tank
- 26: pressure reducing valve
- 27: nitrogen supplement one-way valve
- 28: first recovery valve
- 29: vacuum pump
- 30: second recovery valve
- 31: capsule
- 32: cooling pipeline
- 33: nitrogen supplement pipeline
- 41: nitrogen inlet
- 42: cast aluminum
- 43: nitrogen outlet
- 44: sealing flange
- 45: second electromagnetic heating and heat preservation apparatus
- 46: pore structure
- 47: third cylinder body
- 61: sealing wiring column
- 62: heating unit
- 621: hot plate
- 622: electromagnetic coil
- 623: wire coil
- 63: first electromagnetic heating and heat preservation apparatus
- 631: high-temperature paper
- 632: angle bracket
- 633: housing
- 634: electromagnetic heating coil
- 64: signal receiving unit
- 65: control unit
- 66: control panel
- 67: securing apparatus
- 68: sealing flange
- 69: gas inlet
- 610: second cylinder body
- 611: gas outlet

### DETAILED DESCRIPTION

The implementation of the present application is described below through embodiments. Those skilled in the art can understand other advantages and benefits of the present application from the content described in the specification. The present application may also be implemented or applied through other different specific embodiments, and various modifications or variations may be made to the details in the specification on the basis of various opinions and applications without departing from the spirit of the present application. If not in collision, the embodiments described below and features therein may be combined with each other.

The figures provided by the embodiments below merely illustrate the basic conception of the present application in a schematic manner. The figures merely show the components related to the present application, rather than the number, shape and size of components in the actual implementation. In the actual implementation, the type, number and proportion of each component can be changed arbitrarily, and the layout of the components may be more complicated.

### Embodiment one

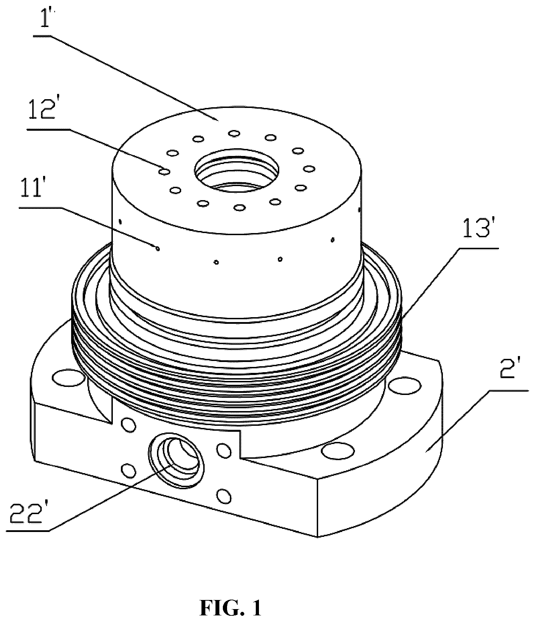

As shown in FIG. 1, an annular seat cylinder head is provided. The annular seat cylinder head includes a cylinder head nozzle 1' and a cylinder head seat 2' connected to each other. The cylinder head nozzle 1' is a core part. Spray inlets 11', cylinder head nitrogen outlets 12', a gas inlet groove 14', and a gas outlet groove 15' are designed on the cylinder head nozzle 1'. The spray inlets 11' are disposed on a side surface of the cylinder head nozzle 1'. The spray directions of the spray inlets 11' are tangent to a central circle and incline downwards. The cylinder head nitrogen outlets 12' are disposed on the top surface of the cylinder head nozzle 1'. The cylinder head nitrogen outlets 12' are uniformly distributed in the circumferential direction. In the circulating vulcanization of nitrogen, the nitrogen is sprayed downward and is tangent to the central circle from the side surface of the cylinder head nozzle 1' to enter a capsule 31. After getting mixed in the capsule 31, the nitrogen flows out from the cylinder head nitrogen outlets 12' at the top of the cylinder head nozzle 1'. The gas inlet groove 14' is an arc groove. The head of the arc groove is disconnected from the tail of the arc groove. The center of the arc groove is on the central axis of the cylinder head nozzle 1'. A plane where a notch of the arc groove is located is parallel to the top surface of the cylinder head nozzle 1'. The arc groove communicates with the spray inlets 11'. The gas outlet groove 15' is a circular groove, is located inside the gas inlet groove 14', and communicates with the cylinder head nitrogen outlets 12'. A vertical gas inlet through groove 16' and a vertical gas outlet through groove 17' are disposed in the cylinder head seat 2')and communicate with the gas inlet groove 14' and the gas outlet groove 15' respectively. A cylinder head gas inlet 21' and a cylinder head gas outlet 22' are disposed on side surfaces of the cylinder head seat 2' and communicate with the gas inlet through groove 16' and the gas outlet through groove 17' respectively.

The diameter of each spray inlet 11' is in the range of 1.8 mm to 4.0 mm. The downward inclination angle is in the range of 15° to 30°. 8 to 24 spray inlets 11' are provided.

The diameter of each cylinder head nitrogen outlet 12' is in the range of 4 mm to 7 mm. 8 to 24 cylinder head nitrogen outlets 12' are provided.

Optionally, the cylinder head nozzle 1' and the cylinder head seat 2' are connected through a stainless steel bolt.

Optionally, the cylinder head seat 2' is designed with external threads 13' to be connected to a matching mechanism.

According to the present application using the preceding structure, the working steps are as follows: High-temperature and high-pressure nitrogen enters the gas inlet groove 14' from the cylinder head gas inlet 21' and upwards through the gas inlet through groove 16' and then enters the capsule through the spray from the spray inlets 11'. After being mixed in the capsule, the nitrogen enters the gas outlet groove 15' through the cylinder head nitrogen outlet 12', then goes downwards through the gas outlet through groove 17', and finally flows out from the cylinder head gas outlet 22'. Then the nitrogen continuously circulates in the capsule under the action of an external heating device and a circulation pump, providing a proper temperature and a stable pressure for the vulcanization of the capsule and improving vulcanization quality.

According to the annular seat cylinder head, the spray inlets incline downward and are tangent to the central circle; and the cylinder head nitrogen outlet, the gas inlet groove, through grooves, and the like are arranged in the circumferential direction. In this case, the high-temperature and high-pressure nitrogen can be uniformly sprayed along the periphery of the capsule wall when entering the capsule. During circulating vulcanization, the temperature of the inner wall of the capsule can be kept in a uniform state, helping to improve the tire quality and meeting the requirements of a pure nitrogen vulcanization process for the annular seat cylinder head of a central mechanism on a uniform temperature and a stable pressure of a temporal part of the capsule.

### Embodiment two

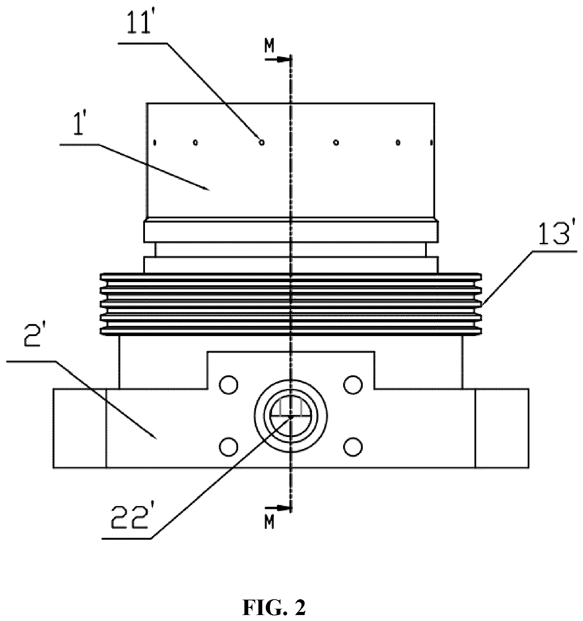

As shown in FIGS. 1 to 3, a gas heater is provided. The gas heater includes a first cylinder body 1", a gas inlet 4', and a gas outlet 6'. The gas inlet 4' and the gas outlet 6' are located on two ends of the first cylinder body 1" respectively. A porous heating body 2" is disposed in the first cylinder body 1". The porous heating body 2" is tightly attached to an inner wall of the first cylinder body 1" through interference fit. A plurality of gas flow channels 9' penetrating a left side and a right side of the porous heating body 2" are disposed in the porous heating body 2". Flow guide cones 3' are disposed at two ends of the porous heating body 2" respectively. A conical pipe 5' is welded at two ends of the first cylinder body 1". The conical pipe 5' is located outside the flow guide cones 3'. A flow channel is formed in a gap between an inner wall of the conical pipe 5' and outer walls of the flow guide cones 3'. Two ends of the conical pipe 5' are securely connected to flange plates respectively. Openings in the middle of the flange plates communicate with the flow channel to form the gas inlet 4' and the gas outlet 6' respectively. An outer wall of the first cylinder body 1" is wrapped with an electromagnetic heating and heat preservation apparatus 7'.

In the present application, with the reasonable porous structure of the porous heating body, the flow guide cones designed at two ends of the porous heating body, and the action of the conical pipe at two ends of the first cylinder body, the gas, after entering from the gas inlet, enters the gas flow channels of the porous heating body uniformly under the guide action of the flow guide cones and the conical pipe to be heated and then flows out from the gas outlet, effectively improving the heat exchange efficiency between the gas and a heating component, improving the output heating power of the heated gas, and resulting in a simple and reliable structure.

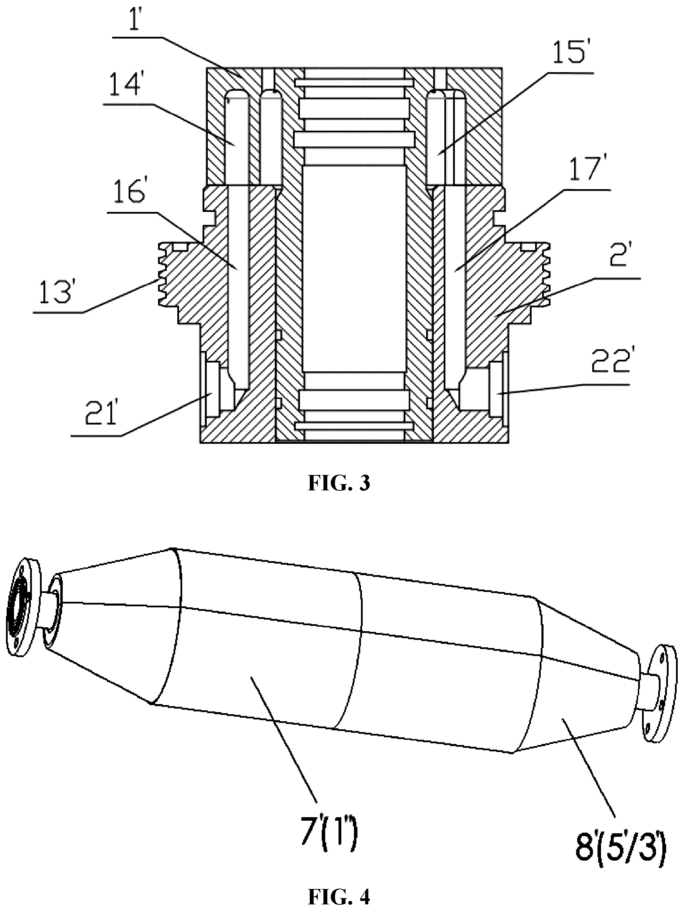

The porous heating body 2" is a cylindrical metal column. A solid structure portion is located at a central axis of a column body of the cylindrical metal column. The gas flow channels 9' disposed around the solid structure portion are disposed outside the central axis, as shown in FIG. 3. Alternatively, the porous heating body 2" is a cylindrical metal column. A hollow structure portion is located at the central axis of the column body of the cylindrical metal column. The gas flow channels 9' disposed around the hollow structure portion are disposed outside the central axis, as shown in FIG. 4. The porous heating body 2" described in the present application can be a solid structure and a hollow structure. A solid structure can increase the stored heat, resulting in higher heat exchange efficiency. A hollow structure can reduce the mass, which is convenient for transportation and mounting.

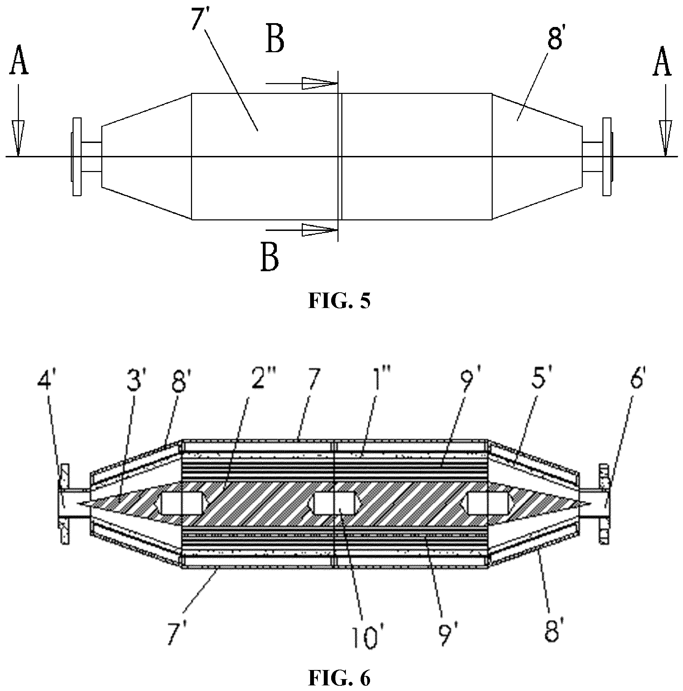

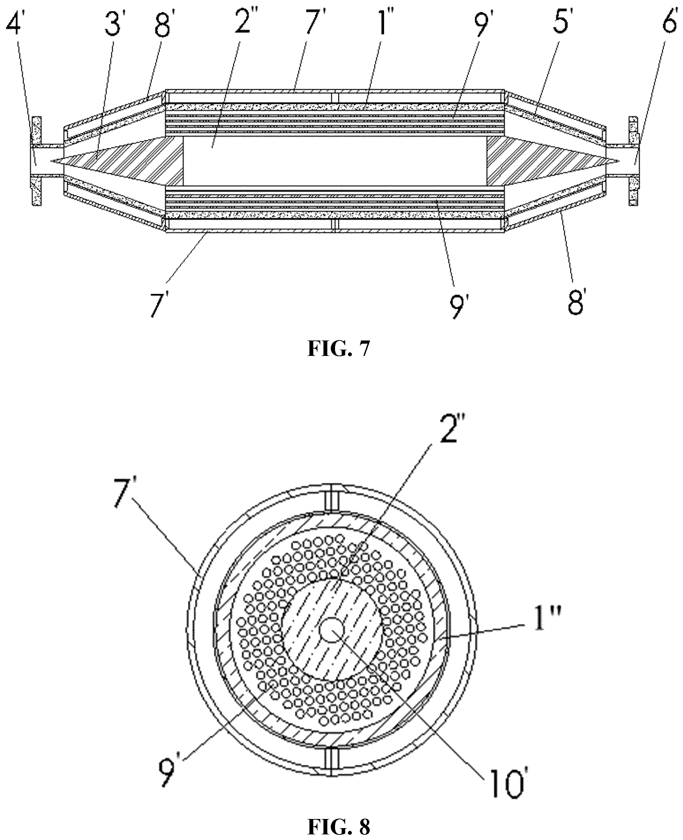

Moreover, the porous heating body 2" is composed of at least one cylindrical metal column. When the porous heating body is a solid structure, a plurality of metal columns are connected to each other and secured into a whole through bolts and screw holes that are disposed at the central axis of the column body, as shown in FIGS. 5 and 6; moreover, the connection between the porous heating body and a flow guide cone at each of the two ends is implemented through a connection structure of a bolt and a screw hole. Alternatively, the flow guide cones are welded to end surfaces of the porous heating body at the two ends directly, as shown in FIG. 7. When the porous heating body is a hollow structure, a plurality of metal columns are securely connected into a whole through welding. The connection between the porous heating body and a flow guide cone at each of the two ends is implemented merely through welding. A tail of the flow guide cone is inserted into a hollow cavity of the porous heating body, and an outer wall of the flow guide cone is welded and secured with an inner wall of the hollow cavity of the porous heating body, as shown in FIGS. 4 and 7.

The porous heating body may be obtained by casting, machining, or metal 3D printing. The outer diameter of the porous heating body is in the range of 120 mm to 400 mm. The length of the porous heating body is in the range of 150 mm to 1000 mm. The diameter of each gas flow channel is in the range of 2 mm to 8 mm. In this case, the optimal heat exchange efficiency is formed.

The outer wall of the first cylinder body 1" is wrapped with the electromagnetic heating and heat preservation apparatus 7'. An electromagnetic heating device described in the invention patent "Electromagnetic heating main body, device and system for a two-half single-screw extruder" applied by the present applicant is used as the electromagnetic heating and heat preservation apparatus. The outer wall of the first cylinder body 1" is wrapped with the electromagnetic heating and heat preservation apparatus to implement the electromagnetic heating on the first cylinder body. Because no heating and heat perseveration apparatus is disposed on an outer wall of the conical pipe 5' at the two ends of the first cylinder body, the outer wall of the conical pipe 5' is wrapped with a heat preservation cover 8' to guarantee the temperature at the gas inlet and the temperature at the gas outlet.

In use, when the porous heating body is used for heating the gas, the porous heating body is preheated first. Firstly, a high-frequency alternating magnetic field is generated by the heating and heat preservation apparatus. An alternating magnetic field line is cut on the surface of the first cylinder body to generate an alternating current (that is, an eddy current) at the metal part at the bottom of the cylinder. The eddy current causes iron atoms of the first cylinder body to move irregularly at a high speed. The atoms collide and rub with each other to generate heat energy, thereby implementing the self-heating of the first cylinder body. Then the first cylinder body transfers heat to the porous heating body through heat conduction until the porous heating body is heated to a set temperature. Later, the gas is introduced from the gas inlet, enters the gas flow channels of the porous heating body through the flow guide action of the flow guide cones and the conical pipe so as to be heated, and then flows out from the gas outlet at the other end. In this case, the conversion of heat to the gas via the porous heating body is completed.

As mentioned above, in the present application, the flow guide action of the flow guide cones and the reasonable structural distribution of the gas flow channels of the porous heating body increase the area of heat exchange with the gas, improve the heat exchange efficiency of the gas, and enhance the output heating power. Moreover, the electromagnetic heating and heat preservation apparatus outside the heater can heat the first cylinder body and perform heat preservation on the first cylinder body, thereby improving the temperature uniformity of the gas and the heating rate of the gas. Besides, the energy-saving effect of the electromagnetic induction heating is remarkable.

In the present application, the first cylindrical body is self-heated through the electromagnetic heating and heat preservation apparatus. The first cylindrical body transfers heat to the porous heating body through heat conduction. The gas flows through the gas flow channels of the porous heating body to take away heat, which can play a role of quick heating and can be more widely applied to the heating environment.

### Embodiment three

The present application is described hereinafter in combination with drawings and this embodiment. An all-nitrogen circulating heating and vulcanization system is provided. The all-nitrogen circulating heating and vulcanization system includes a circulation pipeline 7. A circulation pump 1, a quick heating apparatus 4, a nitrogen heating uniformity apparatus 6, the annular seat cylinder head according to embodiment one, a capsule 31, a circulation buffer tank 15, and a filter 16 are disposed on the circulation pipeline 7 sequentially. The capsule 31 is disposed on the annular seat cylinder head.

The circulation buffer tank 15 on the circulation pipeline 7 is connected to a nitrogen supplement pipeline 33. A nitrogen production system (PSA) 22, a low-pressure nitrogen buffer tank 23, a booster pump 24, a high-pressure nitrogen buffer tank 25, a pressure reducing valve 26, and a nitrogen supplement one-way valve 27 are disposed on the nitrogen supplement pipeline 33 sequentially.

A recovery pipeline 20 is disposed between the capsule 31 on the circulation pipeline 7 and the low-pressure nitrogen buffer tank 23 on the nitrogen supplement pipeline 33. A vacuum pump 29 and a first recovery valve 28 are disposed on the recovery pipeline 20. A second recovery valve 30 is connected in parallel to a head end of the vacuum pump 29 and a tail end of the vacuum pump 29.

A cooling pipeline 32 is connected in parallel between the circulation pump 1 and the circulation buffer tank 15 and on the circulation pipeline 7. A first cooling valve 17, a second cooling valve 18, and a cooling apparatus 19 are disposed on the cooling pipeline 32.

A first pressure sensor 9 and a third temperature sensor 10 are disposed at an inlet of the capsule 31. A fourth temperature sensor 11 and a second pressure sensor 12 are disposed at an outlet of the capsule 31. Such an arrangement is used for monitoring the pressure situation inside the capsule 31 and the temperature situation of vulcanization, thereby adjusting the setting of the circulation flow rate of the circulation pipeline 7 and the heating setting under different working conditions. A second heating valve 14 is disposed between the capsule 31 and the circulation buffer tank 15. A temperature sensor is disposed at an outlet of the circulation buffer tank 15.

A quick vent valve 21 is disposed between the capsule 31 and the circulation buffer tank 15 and on the circulation pipeline 7. The quick vent valve 21 can evacuate the impurity gas in the capsule 31 before the circulating heating and vulcanization.

A first temperature sensor 3 and a second temperature sensor 5 are disposed at an inlet of the quick heating apparatus 4 on the circulation pipeline 7 and an outlet of the quick heating apparatus 4 on the circulation pipeline 7 respectively. A first heating valve 2 is disposed at the inlet of the quick heating apparatus 4. A circulation one-way valve 8 is disposed at an outlet of the nitrogen heating uniformity apparatus 6.

The circulation buffer tank 15 is wrapped with an electromagnetic heating apparatus. Whether to start heating and temperature setting can be selected according to the working state of nitrogen.

The circulation pump 1 includes, but is not limited to, a rotor pump, a Roots pump, or a cylinder pump and can stably circulate the high-temperature and high-pressure nitrogen in the system to increase stable temperature and pressure for tire vulcanization.

The nitrogen heating uniformity apparatus 6 includes a cylindrical second cylinder body 610, a plurality of heating units 62, a first electromagnetic heating and heat preservation apparatus 63, a control unit 65, a securing apparatus 67 configured to secure the heating units in series, a signal receiving unit 64 connected to the control unit and configured to receive signals from the heating units, a control panel 66 connected to the control unit, a sealing flange 68 provided with a stepped through groove, a gas inlet 69, a gas outlet 611, and a sealing wiring column 61. The second cylinder body 610 is wrapped with the first electromagnetic heating and heat preservation apparatus 63.

One end of the nitrogen heating uniformity apparatus 6 is welded and sealed with metal. The other end of the nitrogen heating uniformity apparatus 6 is sealed with the sealing flange 68. The sealing wiring column 61 is welded in the stepped through groove on the sealing flange 68.

At least one set of heating units 62 are provided and are secured on an axial section of the second cylinder body 610 through a securing mechanism. An edge of a heating unit 62 is connected to an inner wall of the second cylinder body 610. The heating unit 62 includes a hot plate 621, an electromagnetic coil 622, and a wire coil 623. A spiral wire slot is formed on the wire coil 623. The electromagnetic coil 622 is secured in the spiral wire slot. The hot plate 621 is disposed on the electromagnetic coil 622. The hot plate 621 has a porous structure. The porous structure may be obtained by casting, machining, metal 3D printing, or porous metal or porous foamed metal. The electromagnetic coil 622 is connected to the control unit 65 through the sealing wiring column 61 secured on the sealing flange. The signal receiving unit 64 is connected to the heating unit 62 through a thermocouple. The electromagnetic coil 622 heats the hot plate 621 through a high-frequency alternating current. The high-temperature nitrogen flowing from the quick heating apparatus 4 passes through the porous structure of the hot plate 621 and is heated by a turbulent flow. The high-temperature and high-pressure nitrogen with a uniform temperature is obtained at the outlet and then passes through the annular seat cylinder head to enter the capsule 31 for vulcanization.

The first electromagnetic heating and heat preservation apparatus 63 is composed of two semicircular rings, is connected to a pull buckle through a hinge, and is attached to an outer wall of the second cylinder body 610. The first electromagnetic heating and heat preservation apparatus 63 includes a housing 633, an angle bracket 632, an electromagnetic heating coil 634, and high-temperature paper 631. Heat preservation cotton is filled between the housing 633 and the electromagnetic heating coil 634 (not shown in FIG. 4). The electromagnetic heating coil 634 adheres to an inner side of the heat preservation cotton through high-temperature adhesive. The high-temperature paper 631 is secured on an innermost side of the first electromagnetic heating and heat preservation apparatus 63 through the angle bracket 632 and wraps the electromagnetic heating coil 634.

The inside of the quick heating apparatus 4 is a lotus-root-type structure with a porous structure, which includes a nitrogen inlet 41, cast aluminum 42, a nitrogen outlet 43, a sealing flange 44, a second electromagnetic heating and heat preservation apparatus 45, and a third cylinder body 47. The cast aluminum 42 is provided with a plurality of pore structures 46 penetrating left and right sides of the cast aluminum 42.

The second electromagnetic heating and heat preservation apparatus 45 having the same structure as the first electromagnetic heating and heat preservation apparatus 63 is used outside the quick heating apparatus 4 to heat the third cylinder body 47 of the quick heating apparatus 4. The third cylinder body 47 transfers heat to the cast aluminum 42 through heat conduction. The cast aluminum 42 inside the quick heating apparatus 4 is provided with the pore structures 46. The pore structures 46 in the cast aluminum 42 can be obtained by pouring or by machining the cast aluminum 42. The nitrogen flows through the pore structures 46 of the cast aluminum 42 and is heated quickly. The second temperature sensor 5 at the outlet of the quick heating apparatus 4 can monitor the temperature of the nitrogen coming out of the quick heating apparatus 4. A set temperature of the quick heating apparatus 4 is adjusted according to the temperature of the nitrogen at the outlet.

The cooling pipeline 32 can quickly cool the high-temperature nitrogen coming out of the capsule 31. Then the nitrogen enters the circulation buffer tank 15 to be heated to a low temperature and then enters the capsule 31 through the circulation pump 1 for circulating cooling.

The nitrogen supplement pipeline 33 can separate and purify the nitrogen in the air. Then the nitrogen enters the low-pressure nitrogen buffer tank 23, gets compressed by the booster pump 24, and then enters the high-pressure nitrogen buffer tank 25. Then the nitrogen passes through the pressure reducing valve 26 and flows into the circulation buffer tank 15.

One end of the recovery pipeline 20 is connected to the nitrogen supplement pipeline 33. The vacuum pump 29, the first recovery valve 28, and the second recovery valve 30 are disposed on the recovery pipeline 20.

The present application further discloses a tire all-nitrogen circulating heating and vulcanization method performed by using the preceding system. The method includes the steps below.

In the first step, the nitrogen is filled into the tire all-nitrogen circulated heating and vulcanization system.

The nitrogen production system 22 is started. Air is introduced into the nitrogen production system 22. The nitrogen production system 22 fills the high-purity nitrogen into the low-pressure nitrogen buffer tank 23 and starts the booster pump 24 to boost pressure of the low-pressure nitrogen and form high-pressure nitrogen. The high-pressure nitrogen enters the high-pressure nitrogen buffer tank 25 and passes through the pressure reducing valve 26, with the pressure reaching a preset value. Then the nitrogen enters a nitrogen circulation buffer tank 15 through the nitrogen supplement one-way valve 27.

In the second step, the quick heating apparatus and the nitrogen heating uniformity apparatus are preheated.

The electromagnetic heating of the quick heating apparatus 4 and the nitrogen heating uniformity apparatus 6 is started to preheat the quick heating apparatus 4 and the nitrogen heating uniformity apparatus 6 until the quick heating apparatus 4 and the nitrogen heating uniformity apparatus 6 are heated to a preheating temperature.

In the third step, heating circulation and vulcanization are performed on the nitrogen.

Circulating heating is performed on the nitrogen with the pressure reaching the preset value. The circulation pump 1 is started. The first heating valve 2 is started; at the same time, the quick vent valve 21 is started to empty the air in the capsule 31. Then the quick vent valve 21 is stopped, and the second heating valve 14 is started. Under the action of the circulation pump 1, the high-pressure nitrogen flows from the nitrogen circulation buffer tank 15 through the filter to enter the circulation pump 1. Then the nitrogen passes through the nitrogen quick heating apparatus 4. The temperature of the nitrogen rises quickly. Then the nitrogen enters the nitrogen heating uniformity apparatus 6 immediately. The humidity and temperature uniformity of the high-pressure nitrogen at the outlet of the nitrogen heating uniformity apparatus 6 reach required values of the working condition under the turbulence and heating of the hot plate of the nitrogen heating uniformity apparatus 6. The nitrogen enters the annular seat cylinder head through the cylinder head gas inlet 21' of the annular seat cylinder head, enters the capsule 31 through the spray inlets 11' for vulcanization, flows from the outlet of the capsule 31 through the cylinder head gas outlet 22' of the annular seat cylinder head to enter the nitrogen circulation buffer tank 15, and then enters the next cycle until the vulcanization stage is completed.

In the fourth step, the capsule is cooled.

The first heating valve 2 and the second heating valve 14 are stopped. The first cooling valve 17 and the second cooling valve 18 are started. After the high-pressure and high-temperature nitrogen comes out of the capsule 31 under the action of the circulation pump 1, the temperature of the nitrogen is reduced by the cooling apparatus. The circulation buffer tank 15 performs low-temperature heating on the nitrogen according to the working condition. Under the action of the circulation pump 1, the nitrogen enters the annular seat cylinder head through the cylinder head gas inlet 21 'of the annular seat cylinder head and then directly enters the capsule 31 through the spray inlets 11'. The capsule 31 is cooled gradually.

In the fifth step, the nitrogen is recovered.

After vulcanization is completed, the circulation pump 1 is stopped. The first cooling valve 17 and the second cooling valve 18 are stopped. The first recovery valve 28 and the second recovery valve 30 are started. The high-pressure nitrogen in the capsule 31 enters the low-pressure nitrogen buffer tank 23 under the action of pressure difference. After the pressure is balanced, the second recovery valve 30 is stopped. The vacuum pump 29 is started to vacuum the capsule 31 and recover the remaining nitrogen into the low-pressure nitrogen buffer tank 23.

A set pressure of the pressure reducing valve 26 on the nitrogen supplement pipeline 33 is a working condition pressure under which vulcanization is performed on the capsule 31. When the pressure in the circulation pipeline 7 is less than the set pressure of the pressure reducing valve 26, the nitrogen in the high-pressure nitrogen buffer tank 25 is supplemented into the circulation buffer tank 15 through the nitrogen supplement one-way valve 27.

With the reasonable pipeline design, valve body control and temperature setting in this embodiment, an ideal pressure and temperature can be matched in each stage of tire vulcanization, which is beneficial to guaranteeing vulcanization quality. The self-circulation of the nitrogen enables energy to be rationally utilized, reducing a waste of energy obviously and improving efficiency obviously.

The first electromagnetic heating and heat preservation apparatus 63 and the second electromagnetic heating and heat preservation apparatus 45 that are used in embodiment three have the same structure as the electromagnetic heating and heat preservation apparatus 7' in embodiment two. Moreover, the quick heating apparatus 4 in embodiment three may be replaced with the gas heater provided in embodiment two.

## Claims

1. An annular seat cylinder head, comprising a cylinder head nozzle (1') and a cylinder head seat (2') connected to each other, wherein spray inlets (11'), cylinder head nitrogen outlets (12'), a gas inlet groove (14'), and a gas outlet groove (15') are designed on the cylinder head nozzle (1'); wherein
the spray inlets (11') are disposed on a side surface of the cylinder head nozzle (1'), and spray directions of the spray inlets (11') are tangent to a central circle and incline downwards;
the cylinder head nitrogen outlets (12') are disposed on a top surface of the cylinder head nozzle (1'), and the cylinder head nitrogen outlets (12') are uniformly distributed in a circumferential direction;
the gas inlet groove (14') is an arc groove, a center of the arc groove is on a central axis of the cylinder head nozzle (1'), a plane where a notch of the arc groove is located is parallel to the top surface of the cylinder head nozzle (1'), and the arc groove communicates with the spray inlets (11');
the gas outlet groove (15') is a circular groove, is located inside the gas inlet groove (14'), and communicates with the cylinder head nitrogen outlets (12'); and
a vertical gas inlet through groove (16') and a vertical gas outlet through groove (17') are disposed in the cylinder head seat (2') and communicate with the gas inlet groove (14') and the gas outlet groove (15') respectively, and a cylinder head gas inlet (21') and a cylinder head gas outlet (22') are disposed on side surfaces of the cylinder head seat (2') and communicate with the gas inlet through groove (16') and the gas outlet through groove (17') respectively.

2. The annular seat cylinder head according to claim 1, wherein a diameter of each of the spray inlets (11') is in a range of 1.8 mm to 4.0 mm, a downward inclination angle is in a range of 15° to 30°, and 8 to 24 spray inlets (11') are provided.

3. The annular seat cylinder head according to claim 1, wherein a diameter of each of the cylinder head nitrogen outlets (12') is in a range of 4 mm to 7 mm, and 8 to 24 cylinder head nitrogen outlets (12') are provided.

4. The annular seat cylinder head according to claim 1, wherein the cylinder head nozzle (1') and the cylinder head seat (2') are connected through a stainless steel bolt.

5. The annular seat cylinder head according to claim 1, wherein the cylinder head seat (2') is designed with external threads (13').

6. A gas heater, comprising a first cylinder body (1"), a gas inlet (4'), and a gas outlet (6'), wherein the gas inlet (4') and the gas outlet (6') are located on two ends of the first cylinder body (1") respectively, a porous heating body (2") is disposed in the first cylinder body (1"), the porous heating body (2") is tightly attached to an inner wall of the first cylinder body (1") through interference fit, a plurality of gas flow channels (9') penetrating a left side and a right side of the porous heating body (2") are disposed in the porous heating body (2"), flow guide cones (3') are disposed at two ends of the porous heating body (2") respectively, a conical pipe (5') is welded at two ends of the first cylinder body (1"), the conical pipe (5') is located outside the flow guide cones (3'), a flow channel is formed in a gap between an inner wall of the conical pipe (5') and outer walls of the flow guide cones (3'), two ends of the conical pipe (5') are securely connected to flange plates respectively, openings in a middle of the flange plates communicate with the flow channel to form the gas inlet (4') and the gas outlet (6') respectively, and an outer wall of the first cylinder body (1") is wrapped with an electromagnetic heating and heat preservation apparatus (7').

7. The gas heater according to claim 6, wherein the porous heating body (2") is a cylindrical metal column, a solid structure portion is located at a central axis of a column body of the cylindrical metal column, and the plurality of gas flow channels (9') disposed around the solid structure portion are disposed outside the central axis of the column body.

8. The gas heater according to claim 6, wherein the porous heating body (2") is a cylindrical metal column, a hollow structure portion is located at a central axis of a column body of the cylindrical metal column, and the plurality of gas flow channels (9') disposed around the hollow structure portion are disposed outside the central axis of the column body.

9. The gas heater according to claim 7, wherein the porous heating body (2") is composed of at least one cylindrical metal column; in a case where the porous heating body (2") is composed of a plurality of cylindrical metal columns, adjacent cylindrical metal columns of the plurality of cylindrical metal columns are connected to each other and secured into a whole through bolts and screw holes (10') that are disposed at the central axis of the column body.

10. The gas heater according to claim 8, wherein the porous heating body (2") is composed of at least one cylindrical metal column; in a case where the porous heating body (2") is composed of a plurality of cylindrical metal columns, adjacent cylindrical metal columns of the plurality of cylindrical metal columns are securely connected into a whole through welding.

11. The gas heater according to any one of claims 6 to 10, wherein an outer diameter of the porous heating body (2") is in a range of 120 mm to 400 mm, a length of the porous heating body is in a range of 150 mm to 1000 mm, and a diameter of each of the plurality of gas flow channels is in a range of 2 mm to 8 mm.

12. The gas heater according to claim 6, wherein an outer wall of the conical pipe (5') is wrapped with a heat preservation cover (8').

13. An all-nitrogen circulating heating and vulcanization system, comprising a circulation pipeline (7), wherein a circulation pump (1), the gas heater (4) according to claims 6 to 12, a nitrogen heating uniformity apparatus (6), the annular seat cylinder head according to claims 1 to 5, a capsule (31), a circulation buffer tank (15), and a filter (16) are disposed on the circulation pipeline (7) sequentially; and the capsule (31) is disposed on the annular seat cylinder head;
the circulation buffer tank (15) on the circulation pipeline (7) is connected to a nitrogen supplement pipeline (33); and a nitrogen production system (22), a low-pressure nitrogen buffer tank (23), a booster pump (24), a high-pressure nitrogen buffer tank (25), a pressure reducing valve (26), and a nitrogen supplement one-way valve (27) are disposed on the nitrogen supplement pipeline (33) sequentially;
a recovery pipeline (20) is disposed between the capsule (31) on the circulation pipeline (7) and the low-pressure nitrogen buffer tank (23) on the nitrogen supplement pipeline (33), a vacuum pump (29) and a first recovery valve (28) are disposed on the recovery pipeline (20), and a second recovery valve (30) is connected in parallel to a head end of the vacuum pump (29) and a tail end of the vacuum pump (29); and
a cooling pipeline (32) is connected in parallel between the circulation pump (1) and the circulation buffer tank (15) and on the circulation pipeline (7); and a first cooling valve (17), a second cooling valve (18), and a cooling apparatus (19) are disposed on the cooling pipeline (32).

14. The system according to claim 13, wherein a first pressure sensor (9) and a third temperature sensor (10) are disposed at an inlet of the capsule (31), a fourth temperature sensor (11) and a second pressure sensor (12) are disposed at an outlet of the capsule (31), a second heating valve (14) is disposed between the capsule (31) and the circulation buffer tank (15), and a temperature sensor is disposed at an outlet of the circulation buffer tank (15).

15. The system according to claim 13, wherein a quick vent valve (21) is disposed between the capsule (31) and the circulation buffer tank (15) and on the circulation pipeline (7).

16. The system according to any one of claim 14 or 15, wherein the circulation buffer tank (15) is wrapped with an electromagnetic heating apparatus.

17. The system according to claim 13, wherein a first temperature sensor (3) and a second temperature sensor (5) are disposed at an inlet of the gas heater (4) on the circulation pipeline (7) and an outlet of the gas heater (4) on the circulation pipeline (7) respectively, a first heating valve (2) is disposed at an inlet of a quick heating apparatus (4), and a circulation one-way valve (8) is disposed at an outlet of the nitrogen heating uniformity apparatus (6).

18. The system according to any one of claim 13 or 17, wherein the nitrogen heating uniformity apparatus (6) comprises a cylindrical second cylinder body (610), a plurality of heating units (62), a first electromagnetic heating and heat preservation apparatus (63), a control unit (65), a securing apparatus (67) configured to secure the plurality of heating units in series, a signal receiving unit (64) connected to the control unit and configured to receive signals from the plurality of heating units, a control panel (66) connected to the control unit, a sealing flange (68) provided with a stepped through groove, a gas inlet (69), a gas outlet (611), and a sealing wiring column (61); and the second cylinder body (610) is wrapped with the first electromagnetic heating and heat preservation apparatus (63);
one end of the nitrogen heating uniformity apparatus (6) is welded and sealed with metal, an other end of the nitrogen heating uniformity apparatus (6) is sealed with the sealing flange (68), and the sealing wiring column (61) is welded in the stepped through groove on the sealing flange (68); and
at least one set of heating units (62) are provided and are secured on an axial section of the second cylinder body (610) through a securing mechanism, an edge of a heating unit (62) of the at least one set of heating units (62) is connected to an inner wall of the second cylinder body (610); the heating unit (62) comprises a hot plate (621), an electromagnetic coil (622), and a wire coil (623); a spiral wire slot is formed on the wire coil (623); the electromagnetic coil (622) is secured in the spiral wire slot; the hot plate (621) is disposed on the electromagnetic coil (622); the hot plate (621) has a porous structure; the electromagnetic coil (622) is connected to the control unit (65) through the sealing wiring column (61) secured on the sealing flange; and the signal receiving unit (64) is connected to the heating unit (62) through a thermocouple.

19. The system according to claim 18, wherein the first electromagnetic heating and heat preservation apparatus (63) is composed of two semicircular rings, is connected to a pull buckle through a hinge, and is attached to an outer wall of the second cylinder body (610); the first electromagnetic heating and heat preservation apparatus (63) comprises a housing (633), an angle bracket (632), an electromagnetic heating coil (634), and high-temperature paper (631); heat preservation cotton is filled between the housing (633) and the electromagnetic heating coil (634); the electromagnetic heating coil (634) adheres to an inner side of the heat preservation cotton through high-temperature adhesive; and the high-temperature paper (631) is secured on an innermost side of the first electromagnetic heating and heat preservation apparatus (63) through the angle bracket (632) and wraps the electromagnetic heating coil (634).

20. An all-nitrogen circulating heating and vulcanization method performed by using the system according to claim 13, comprising:
filling nitrogen into the all-nitrogen circulated heating and vulcanization system;
preheating the gas heater and the nitrogen heating uniformity apparatus;
performing heating circulation and vulcanization on the nitrogen;
cooling the capsule; and
recovering the nitrogen.

21. The method according to claim 20, wherein a set pressure of a pressure reducing valve (26) is a working condition pressure under which vulcanization is performed on the capsule (31); and in a case where a pressure in the circulation pipeline (7) is less than the set pressure of the pressure reducing valve (26), the nitrogen in the high-pressure nitrogen buffer tank (25) is supplemented into the circulation buffer tank (15) through the nitrogen supplement one-way valve (27).
